# EUROPÄISCHE PATENTANMELDUNG

(11) **EP 4 287 495 A1**
(43) Veröffentlichungstag der Anmeldung: **06.12.2023**
(21) Anmeldenummer: 22176268.5
(22) Anmeldetag: 31.05.2022
(51) Int. Cl.: H02P 6/182, H02P 6/08, H02P 6/15, G05B 19/042

(54) **VERFAHREN ZUM BETREIBEN EINER SCHALTUNGSANORDNUNG ZUR BEMF NULLDURCHGANGSERKENNUNG**

(71) Anmelder: Hilti Aktiengesellschaft, 9494 Schaan (LI)
(72) Erfinder: Freischle, Justus, 86899 Landsberg (DE)
(74) Vertreter: Hilti Aktiengesellschaft Corporate Intellectual Property

(57) **Zusammenfassung**

Verfahren zum Betreiben einer Schaltungsanordnung im Rahmen einer BEMF Nulldurchgangserkennung, die als Grundlage für eine sensorlose Kommutierung eines bürstenlosen Gleichstrommotors dient, wobei die Schaltungsanordnung wenigstens einen Komparator und einen Mikrocontroller aufweist, wobei der Komparator dazu eingerichtet ist, eine Phasenspannung oder Klemmenspannung des bürstenlosen Gleichstrommotors mit einer Sternpunktspannung (rekonstruiert über die Klemmenspannungen oder direkt abgegriffen) des bürstenlosen Gleichstrommotors zu vergleichen und ein entsprechendes Komparatorsignal an einen mit dem Komparator verbundenen Signalpfad des Mikrocontrollers auszugeben, wobei der mit dem Komparator verbundene Signalpfad des Mikrocontrollers und/oder Mikrocontrollerpins periodisch zwischen einem Eingangsmodus und einem Ausgangsmodus umgeschaltet wird.

## Beschreibung

Die vorliegende Erfindung betrifft ein Verfahren zum Betreiben einer Schaltungsanordnung im Rahmen einer BEMF Nulldurchgangserkennung. Die BEMF Nulldurchgangserkennung dient als Grundlage für eine sensorlose Kommutierung, insbesondere Blockkommutierung eines bürstenlosen Gleichstrommotors. Die Schaltungsanordnung weist wenigstens einen Komparator und einen Mikrocontroller auf, wobei der Komparator dazu eingerichtet ist, eine Phasenspannung oder Klemmenspannung des bürstenlosen Gleichstrommotors mit einer Sternpunktspannung des bürstenlosen Gleichstrommotors zu vergleichen und ein entsprechendes Komparatorsignal an einen mit dem Komparator verbundenen Signalpfad des Mikrocontrollers und/oder Mikrocontrollerpins auszugeben.

Als Klemmenspannung wird im Folgenden die Spannung zwischen einer Motorklemme und der Masse des vorgeschalteten Motorinverters bezeichnet.

Die Sternpunktspannung wird dabei über die Klemmenspannungen rekonstruiert oder direkt abgegriffen.

Bei der sensorlosen Kommutierung wird schon seit einiger Zeit das Verfahren der BEMF Nulldurchgangserkennung zur Bestimmung des Kommutierungszeitpunktes eingesetzt. Dabei wird die Eigenschaft der 2-FET Blockkommutierung ausgenutzt, dass - beispielhaft - immer nur zwei der drei vorhandenen Motorphasen des bürstenlosen Gleichstrommotors gleichzeitig bestromt werden. Somit kann die in der dritten Phase die induzierte Spannung, hervorgerufen durch die im Rotor des bürstenlosen Gleichstrommotors eingebetteten Permanentmagneten, gemessen werden. Dies erfolgt durch die im vorherigen Absatz beschriebenen Komparatoren.

US 8,274,250 offenbart ein Steuerungsverfahren für einen bürstenlosen Gleichstrommotor, wobei eine gegenelektromotorische Kraft (BEMF), in Abhängigkeit eines Maskierungssignals, detektiert wird.

Es ist Aufgabe der vorliegenden Erfindung ein Verfahren zum Betreiben einer Schaltungsanordnung im Rahmen einer BEMF Nulldurchgangserkennung anzugeben, welches eine reduzierte Auslastung des Mikrocontrollers begünstigt und gleichzeitig ein genaueres Positionstracking ermöglicht.

Die Aufgabe wird dadurch gelöst, dass im Rahmen des Verfahrens der mit dem Komparator verbundene Signalpfad des Mikrocontrollers periodisch zwischen einem Eingangsmodus und einem Ausgangsmodus umgeschaltet wird. Dabei wird im späteren Textverlauf immer auf den Komparator Bezug genommen, welcher aktuell mit einer nicht bestromten Motorklemme verbunden ist. Im folgenden Textverlauf wird dieser auch als aktiver Komparator bezeichnet. Im Eingangsmodus ist ein mit dem Signalpfad des Mikrocontrollers verbundener Pin des Mikrocontrollers vorzugsweise als Eingang konfiguriert, um ein Komparatorsignal des Komparators auszuwerten. Im Ausgangsmodus ist ein mit dem Signalpfad des Mikrocontrollers verbundener Pin des Mikrocontrollers vorzugsweise als Ausgang konfiguriert, um den Mikrocontrollersignalpfad und damit ebenso den Mikrocontrollerpin mit einem bestimmten digitalen Signalpegel zu konditionieren. Es hat sich als vorteilhaft herausgestellt, wenn die sensorlose Kommutierung als Blockkommutierung durchgeführt wird.

Die Erfindung schließt die Erkenntnis ein, dass eine Erfassung eines Komparatorsignals mittels eines Mikrocontrollers auf zwei unterschiedliche Weisen erfolgen kann. Entweder kann das Komparatorsignal in fixen Zeitabständen abgetastet werden (Polling) oder mit einer Mikrocontrollerperipherie (in der Regel Interrupts) direkt auf eine Signalflanke des Komparators reagiert werden. Es hat sich gezeigt, dass das Polling bei hohen Drehzahlen des bürstenlosen Gleichstrommotors - beispielsweise ab 60000 U/min im elektrischen Bezugssystem - zu unerwünscht hohen Winkelfehlern führen kann. Bezüglich der Erfassung mittels Interrupts wurde erkannt, dass viele Mikrocontroller Typen lediglich flankengesteuerte Interrupts anbieten. Allerdings lassen sich Flankendetektoren, welche die Generierung der Interrupts innerhalb des Mikrocontrollers auslösen, in den meisten Fällen nicht deaktivieren. Somit könnte es in ungünstigen Fällen vorkommen, dass es innerhalb des gültigen PWM Abschnittes keine fallende oder steigende Flanke der zu erfassende Komparatorsignale gibt, da der Nulldurchgang in einem vorangegangen ungültigen Zeitabschnitt erfolgt ist. Folglich würde kein Interrupt generiert werden und somit würde keine Kommutierung durchgeführt werden. Dies wiederum würde zum Versagen der Motorregelung führen.

Dadurch, dass erfindungsgemäß ein mit dem Komparator verbundener Signalpfad des Mikrocontrollers periodisch zwischen einem Eingangsmodus und einem Ausgangsmodus umgeschaltet wird, wird eine Grundlage für die Vermeidung der genannten Nachteile geschaffen.

Unter einem BEMF Nulldurchgang ist im Rahmen der vorliegenden Anmeldung insbesondere ein solcher Punkt zu verstehen, bei welchem sich die Klemmenspannung der nicht bestromten Motorphase mit der Sternpunktspannung des Motors (rekonstruiert über die Klemmenspannungen oder direkt abgegriffen) passend für den aktuellen Rotorpositionssektor in korrekter Richtung schneidet.

Im Rahmen der vorliegenden Anmeldung wird unter einem gültigen Zeitabschnitt insbesondere ein solcher Zeitabschnitt angesehen werden in dem der Ausgangssignalverlauf (Komparatorsignal) des BEMF Nulldurchgangskomparators, die Relation zwischen der BEMF der nicht bestromten Phase und der Sternpunktspannung (rekonstruiert über die Klemmenspannungen oder direkt abgegriffen) korrekt wiedergibt. Unter einem ungültigen Zeitabschnitt wird insbesondere ein solcher Zeitabschnitt angesehen in dem der Ausgangssignalverlauf (Komparatorsignal) des BEMF Nulldurchgangskomparators, die Relation zwischen der BEMF der nicht bestromten Motorphase und der Sternpunktspannung (gemessen oder rekonstruiert) mit einem falschen Signalpegel wiedergibt.

In einer besonders bevorzugten Ausgestaltung des Verfahrens ist vorgesehen, dass ein mit dem Signalpfad des Mikrocontrollers verbundener Pin des Mikrocontrollers im Eingangsmodus als Eingang konfiguriert ist, um das Komparatorsignal des Komparators für die BEMF Nulldurchgangserkennung auszuwerten. Es hat sich als vorteilhaft herausgestellt, wenn der mit dem Signalpfad des Mikrocontrollers verbundene Pin des Mikrocontrollers im Ausgangsmodus als Ausgang konfiguriert ist, um den Signalpegel am Pin des Mikrocontrollers, während den ungültigen PWM Zeitabschnitten für den im Mikrocontroller befindlichen Flankendetektor korrekt konditionieren zu können.

Gemäß einer weiteren vorteilhaften Ausführungsform ist es möglich, dass während sich der Pin des Mikrocontrollers im Ausgangsmodus befindet, der Signalpfad des Mikrocontrollers und das Komparatorausgangssignal den gleichen oder einen unterschiedlichen Signalpegel aufweisen können.

In einer besonders bevorzugten Ausgestaltung ist der konditionierende Pegel für den Mikrocontrollerpin im Ausgangsmodus ein logischer "High" oder "Low" Pegel. Die Spannungen der Pegel sind durch die Versorgungsspannung des Mikrocontrollers definiert.

Es hat sich als vorteilhaft herausgestellt, wenn der Komparator außerhalb des Mikrocontrollers angeordnet ist und zwischen einem das Komparatorsignal ausgebenden Komparatorausgang des Komparators und einem mit dem Signalpfad verbundenen Pin des Mikrocontrollers ein ohmscher Widerstand vorgesehen ist.

In einer besonders bevorzugten Ausgestaltung erfolgt das Umschalten zwischen Eingangs- und Ausgangsmodus synchron zu einem PWM Trägersignal der Motorregelung des bürstenlosen Gleichstrommotors und/oder in Abhängigkeit eines Tastverhältnisses der Motorregelung des bürstenlosen Gleichstrommotors. Diese Umschaltung wird im Folgenden als Signalkonditionierung bezeichnet. Es hat sich als vorteilhaft herausgestellt, wenn der Mikrocontroller Pin länger als Ausgang konfiguriert ist (Ausgangsmodus), als der ungültige Zeitbereich einer PWM Periode lang ist.

In einer weiteren besonders bevorzugten Ausgestaltung weist das Verfahren im Rahmen der sensorlosen Kommutierung des bürstenlosen Gleichstrommotors neben der bereits beschriebenen Signalkonditionierung die folgenden Schritte auf:
- Deaktivieren des flankenbezogenen Interrupt-Triggers des Mikrocontrollers und/oder Deaktivieren eines externen Interrupts des zum Signalpfad des Mikrocontrollers zugehörigen Mikrocontrollerpins der aktuell nicht bestromten Motorklemme, wenn eine durchzuführende Kommutierung erkannt wird;
- Setzen einer neuer Leistungsschalterkombination für den bürstenlosen Gleichstrommotor, um eine passende Bestromung für den aktuellen Rotorpositionssektor des bürstenlosen Gleichstrommotors herstellen zu können;
- Deaktivieren des im vorherigen Schritt aktivierten Interrupts, sobald erkannt wird, dass die nicht aktive Motorphase stromlos ist; und umkonfigurieren des Interrupt Triggers auf eine entweder steigende oder fallende Flanke abhängig vom aktuellen Rotorpositionssektor zur Detektion des BEMF Nulldurchgangs. Anschließend wird der umkonfigurierte Interrupt aktiviert.
- Solange die sensorlose Kommutierung basierend auf einer BEMF Nulldurchgangserkennung aktiv ist, wird dieses Verfahren ausgeführt und immerzu wie beschrieben die Signalkonditionierung für den Flankendetektor des Mikrocontrollerpins ausgeführt.

Es hat sich als vorteilhaft herausgestellt, wenn die Schritte in dieser Reihenfolge durchgeführt werden. In einer besonders bevorzugten Ausgestaltung werden die genannten Verfahrensschritte, nach erfolgreicher Detektion eines BEMF Nulldurchgangs, beginnend mit dem ersten Verfahrensschritt wiederholt, insbesondere so lange, wie der bürstenlose Gleichstrommotor in einem BEMF Betrieb betrieben werden soll.

Gemäß einer vorteilhaften Ausführung kann es möglich sein, dass der folgende Verfahrensschritt enthalten ist:
- Umschalten des aktiven Komparators auf den der aktuell nicht bestromten Motorklemme zugehörigen und somit ebenfalls des Signalpfades des Mikrocontrollers und des zughörigen Mikrocontrollerpins und Aktivieren der bereits beschriebenen Signalkonditionierung für diesen Mikrocontrollerpin mit anschließender Auswahl, ob ein Interrupt des Mikrocontrollers, welcher das Ende der Abkommutierung erkennt, bei steigender oder fallender Signalflanke ausgelöst werden soll, gefolgt von einem Aktivieren dieses Interrupts

Die Aufgabe der sensorlosen Kommutierung eines bürstenlosen Gleichstrommotors wird ebenfalls gelöst durch eine Schaltungsanordnung zur BEMF Nulldurchgangserkennung. Die Schaltungsanordnung weist wenigstens einen Komparator und einen Mikrocontroller auf, wobei der Komparator dazu eingerichtet ist, eine Phasenspannung oder Klemmenspannung des bürstenlosen Gleichstrommotors mit einer Sternpunktspannung (rekonstruiert über die Klemmenspannungen oder direkt abgegriffen) des bürstenlosen Gleichstrommotors zu vergleichen und ein entsprechendes Komparatorsignal an einen Signalpfad des Mikrocontrollers auszugeben. Der Mikrocontroller ist eingerichtet, den Signalpfad periodisch zwischen einem Eingangsmodus und einem Ausgangsmodus umzuschalten.

Es hat sich als vorteilhaft herausgestellt, wenn der Komparator außerhalb des Mikrocontrollers angeordnet ist und/oder zwischen einem das Komparatorsignal ausgebenden Komparatorausgang des Komparators und einem mit dem Signalpfad verbundenen Pin des Mikrocontrollers ein ohmscher Widerstand vorgesehen ist. In einer alternativen Ausgestaltung kann der Komparator innerhalb des Mikrocontrollers angeordnet sein und einem Komparatoreingang des Komparators ein ohmscher Widerstand vorgeschaltet sein.

Die Erfindung führt ebenfalls auf eine elektrische Handwerkzeugmaschine mit einem bürstenlosen Gleichstrommotor, der vorzugsweise dreiphasig ausgebildet ist, in Kombination mit einer Kommutierungsart, welche sich zum sensorlosen Kommutieren des bürstenlosen Gleichstrommotors eignet. Es hat sich als vorteilhaft herausgestellt, wenn die Handwerkzeugmaschine wenigstens eine Schaltungsanordnung der vorbeschriebenen Art aufweist. Es hat sich als ebenfalls als vorteilhaft herausgestellt, wenn die Schaltungsanordnung wenigstens zeitweise das Verfahren der vorbeschriebenen Art ausführt.

Weitere Vorteile ergeben sich aus der folgenden Figurenbeschreibung. In der Figur ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Das Verfahren kann durch die mit Bezug auf die Vorrichtung (was ist mit Vorrichtung gemeint?) beschriebenen Merkmale weitergebildet sein - und umgekehrt.

In der Figur sind gleiche und gleichartige Komponenten mit gleichen Bezugszeichen beziffert. Es zeigt:
- Fig. 1: eine bevorzugte Schaltungsanordnung zur BEMF Nulldurchgangserkennung;
- Fig. 2: ein Graph mit Spannungsverläufen eines BLDC Motors welcher mit einer 2FET-Kommutierung betrieben wird;
- Fig. 3: ein Graph mit einem Signalverlauf, der ein periodisches Umschalten zwischen einem Eingangsmodus und einem Ausgangsmodus zeigt;
- Fig. 4: ein Graph mit einem während des ungültigen Zeitabschnittes benötigten Ausgangspegel des Mikrocontrollerpins;
- Fig. 5: ein Graph mit Signalverläufen bei denen lediglich zwei Signalflanken am Mikrocontrollerpin pro Kommutierungsabschnitt erzeugt werden; und
- Fig. 6: ein bevorzugtes Verfahren zur sensorlosen Kommutierung eines bürstenlosen Gleichstrommotors.

### Ausführunasbeispiele:

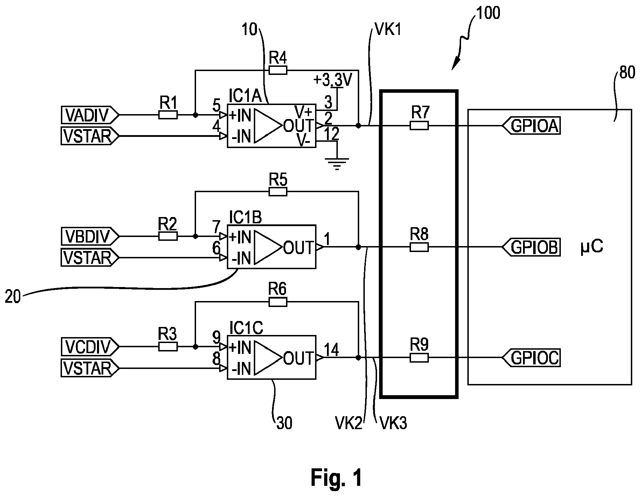

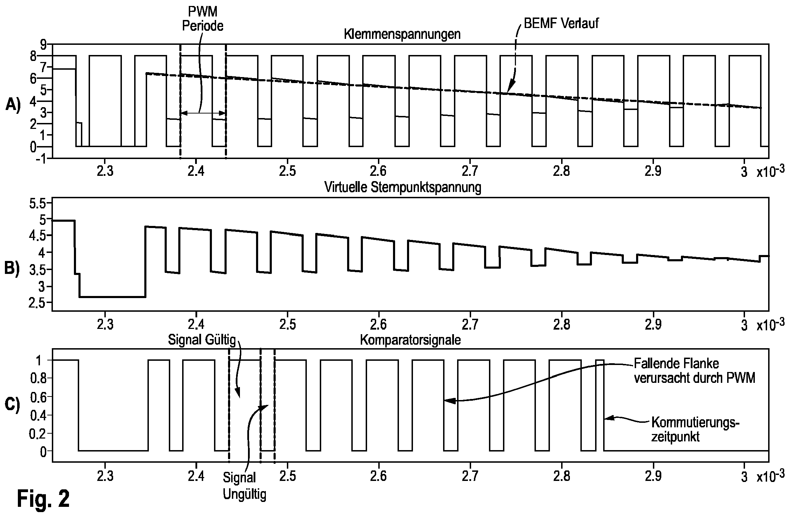

Fig. 1 zeigt schematisch eine Schaltungsanordnung 100 zur BEMF Nulldurchgangserkennung für einen hier nicht dargestellten bürstenlosen Gleichstrommotor mit drei Phasen, der durch eine Brücke mit jeweils zwei FET pro Phase kommutiert wird. Die Schaltungsanordnung 100 weist drei Komparatoren 10, 20, 30 und einen Mikrocontroller 80 auf. Die Komparatoren 10, 20, 30 sind dazu eingerichtet eine Phasen- oder Klemmenspannung VADIV, VBDIV, VCDIV des bürstenlosen Gleichstrommotors jeweils mit einer Sternpunktspannung (rekonstruiert über die Klemmenspannungen oder direkt abgegriffen) VSTAR des bürstenlosen Gleichstrommotors zu vergleichen, ein entsprechendes Komparatorsignal VK1, VK2, VK3 zu erzeugen und dieses jeweils an einen Signalpfad GPIOA, GPIOB, GPIOC des Mikrocontrollers 80 auszugeben. Die Komparatoren 10, 20, 30 dienen zur Detektion denjenigen Punkts, in dem sich die Klemmenspannung einer nicht bestromten Motorphase (in den die Fig. 2 bis 5 die Phasenspannung VBDIV der nicht mit einem Brückenstrom beaufschlagten B-Phase) des bürstenlosen Gleichstrommotors mit der Sternpunktspannung (rekonstruiert über die Klemmenspannungen oder direkt abgegriffen) VSTAR schneidet. Die Komparatoren 10, 20, 30 verändern ihr Komparatorsignal VK1, VK2, VK3 je nach BEMF Flankenrichtung entweder von "Low" zu "High" oder von "High" zu "Low". Diese Signalflanken müssen durch den Mikrocontroller 80 möglichst genau erfasst werden können, um eine gleichmäßige Kommutierung zu gewährleisten.

Erfindungsgemäß ist der Mikrocontroller 80 eingerichtet, den Signalpfad GPIOA, GPIOB, GPIOC periodisch zwischen einem Eingangsmodus und einem Ausgangsmodus umzuschalten. Dies wird später mit Bezug auf die Fig. 2 bis 5 genauer erläutert.

Wie der Fig. 1 entnommen werden kann, sind die Komparatoren 10, 20, 30 außerhalb des Mikrocontrollers 80 angeordnet. Zwecks Strombegrenzung im Falle eines ungleichen Ausgangspegels des Mikrocontrollers 80 (dann im Ausgangsmodus) und des aktiven Komparators 10, 20, 30 ist jeweils zwischen einem Komparatorsignal ausgebenden VK1, VK2, VK3 Komparatorausgang des Komparators 10, 20, 30 und einem mit dem Signalpfad GPIOA, GPIOB, GPIOC verbundenen Pin des Mikrocontrollers 80 ein ohmscher Widerstand R7, R8, R9 vorgesehen.

Alternativ, dies ist in Fig. 1 nicht dargestellt, kann der Komparator innerhalb des Mikrocontrollers angeordnet sein und einem Komparatoreingang des Komparators ein ohmscher Widerstand vorgeschaltet sein.

Die Schaltungsanordnung 100 der Fig. 1 kann Teil einer elektrischen Handwerkzeugmaschine sein, oder Teil einer anderen Maschine wie beispielsweise einer Kreissäge oder eines Baustaubsaugers sein.

Fig. 2A zeigt beispielhaft ein Graph mit Signalverläufen der drei Klemmenspannungen (vgl. Fig. 1 VADIV, VBDIV, VCDIV) eines BLDC Motors, welcher mit einer 2FET-Kommutierung betrieben wird. Dargestellt ist in den Fig. 2 bis 5 beispielhaft ein Kommutierungsintervall bei welchem die Motorphase B nicht bestromt wird. In Fig. 2B ist die Sternpunktspannung (rekonstruiert über die Klemmenspannung) des Motors dargestellt, in Fig. 2C) der Ausgangssignalverlauf (Komparatorsignal) des BEMF Nulldurchgangskomparators der Motorphase B (vgl. Fig. 1 Komparator 20).

Im Graph der Fig. 2A ist zusätzlich der Verlauf der BEMF als gestrichelte Linie dargestellt. Dies zeigt deutlich, dass nur bestimmte Zeitintervalle innerhalb einer PWM Periode den wirklichen Verlauf der BEMF wiedergeben. Die Verzerrungen der BEMF sind in den ungültigen Zeitintervallen oft so stark, dass das Komparatorsignal (vgl. VK2 in Fig. 1) den Signalzustand wechselt. Würde dieses Komparatorsignal nun an einen flankengesteuerten Interrupteingang geführt werden, würde bei jeder Signalflanke ein Interrupt ausgelöst werden. Die hinterlegte Interrupt Routine müsste entscheiden, ob es sich um einen Interrupt handelt welcher durch die Verzerrung der BEMF durch die PWM ausgelöst wurde oder ob es sich um einen wirklichen Nulldurchgang der BEMF handelt. Dies würde die Prozessorauslastung allerdings drastisch erhöhen und die interruptbasierte sensorlose Kommutierung praktisch nicht umsetzbar machen.

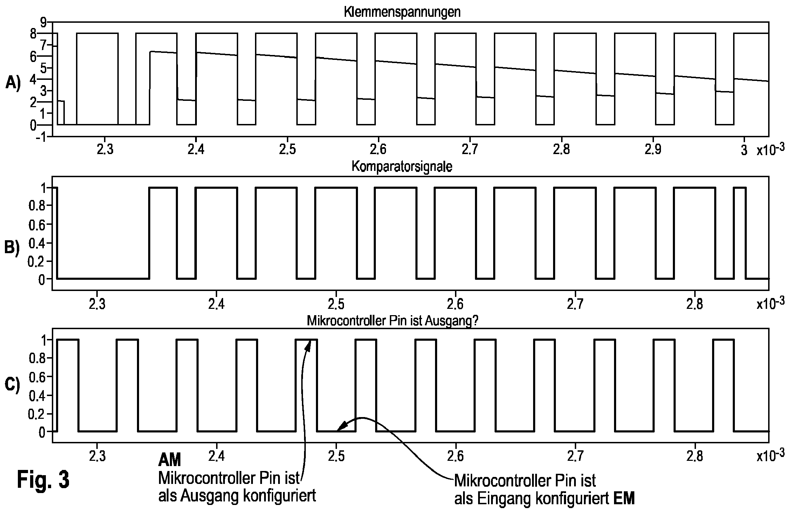

Fig. 3A zeigt den gleichen Signalverlauf wie Fig. 2 A. Der Signalverlauf der Fig. 2C wiederholt sich in Fig. 3B. Fig. 3C zeigt nun wie - erfindungsgemäß - ein mit dem Komparator verbundener Signalpfad des Mikrocontrollers periodisch zwischen einem Eingangsmodus EM und einem Ausgangsmodus AM umgeschaltet wird.

Im Eingangsmodus EM ist ein mit dem Signalpfad (vgl. Fig. 1 "GPIOB") des Mikrocontrollers verbundener Pin des Mikrocontrollers als Eingang konfiguriert, um ein Komparatorsignal (vgl. Fig. 2 VK2) des Komparators auszuwerten. Im Ausgangsmodus AM ist der mit dem Signalpfad des Mikrocontrollers verbundener Pin des Mikrocontrollers als Ausgang konfiguriert, um den Signalpegel am Pin des Mikrocontrollers, während den ungültigen PWM Zeitabschnitten für den Flankendetektor des Mikrocontrollerpins korrekt konditionieren zu können. Dadurch wird die Grundlage geschaffen, lediglich ein Minimum an Signalflanken am Mikrocontrollerpin zu generieren. Im Optimalfall wird lediglich ein Interrupt generiert welcher indiziert, dass die nicht aktive Motorphase stromlos ist, so dass die BEMF erfasst werden kann und ein Interrupt, der den BEMF Nulldurchgang erfasst, durch welchen wiederum direkt die Kommutierung eingeleitet werden kann.

Mit anderen Worten ist die dem erfindungsgemäßen Verfahren zugrundeliegende Idee, dass ein Mikrocontroller Pin nun zweierlei Aufgaben erfüllt: Während des gültigen Zeitabschnittes innerhalb einer PWM Periode wird der Mikrocontroller Pin als Eingang beschaltet und erfasst somit das aktuell am Mikrocontroller anliegende Komparatorsignal. In den Zeitabschnitten der PWM Periode, in denen das Komparatorsignal ungültig ist, wird der Mikrocontroller Pin als Ausgang definiert und konditioniert so mit seinem Signalpegel den anliegenden Pegel am Flankendetektor des Mikrocontrollerpins.

Ist, wie in Fig. 3C dargestellt, der Mikrocontrollerpin als Ausgang definiert (Ausgangsmodus AM), kann, während der ungültigen PWM Zeitintervalle, ein beliebiger Pegel durch den Mikrocontrollerpin erzeugt werden. Dieser wird vorteilhafterweise so gewählt, dass der Flankendetektor des Mikrocontrollerpins während des folgenden gültigen Zeitabschnittes die erwartete Flankenrichtung detektieren kann. Da der Verlauf der BEMF deterministisch und bekannt ist, können für einen Kommutierungsabschnitt die Ausgangspegel vorkonfiguriert werden. Bezogen auf den in Fig. 3C dargestellten Verlauf muss der Signalpfad (vgl. Fig. 1 GPIOB) am Mikrocontroller in den ungültigen PWM Zeitabschnitten einen "High" Pegel aufweisen, um den Flankendetektor für eine fallende Flanke im gültigen PWM Zeitabschnitt vorzubereiten. Natürlich kann innerhalb des Zeitraumes, wenn der Mikrocontroller Pin als Ausgang geschaltet ist, dass aktuelle Komparatorsignal (vgl. Fig. 1 VK2) nicht erfasst werden. Dies führt zu Ungenauigkeiten in der Erkennung des BEMF Nulldurchganges. Allerdings wird das ungültige Zeitintervall mit steigendem Tastverhältnis (höheres Lastmoment oder höhere Drehzahl) immer kleiner und somit die Kommutierungsgenauigkeit gesteigert. Besonders bevorzugt ist der Mikrocontrollerpin länger als Ausgang konfiguriert, als der ungültige Zeitbereich einer PWM Periode lang ist. Dies verhindert, dass Einschwingvorgänge der Signale zu Fehlern in der Flankenerkennung des Komparatorsignals führen.

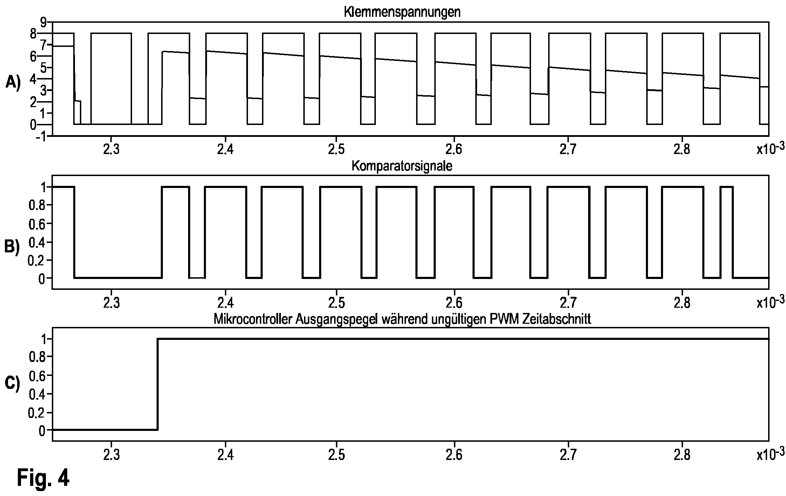

Fig. 4A zeigt den gleichen Signalverlauf wie Fig. 3A. Der Signalverlauf der Fig. 3B wiederholt sich in Fig. 4B. Fig. 4C zeigt nun exemplarisch einen während des ungültigen PWM Zeitabschnittes benötigten Signalpegel, um den Flankendetektor des jeweiligen Mikrocontrollerpins bzw. des jeweiligen Mikrocontroller Signalpfades korrekt konditionieren zu können (vgl. Fig. 1 Signalpfad GPIOB).

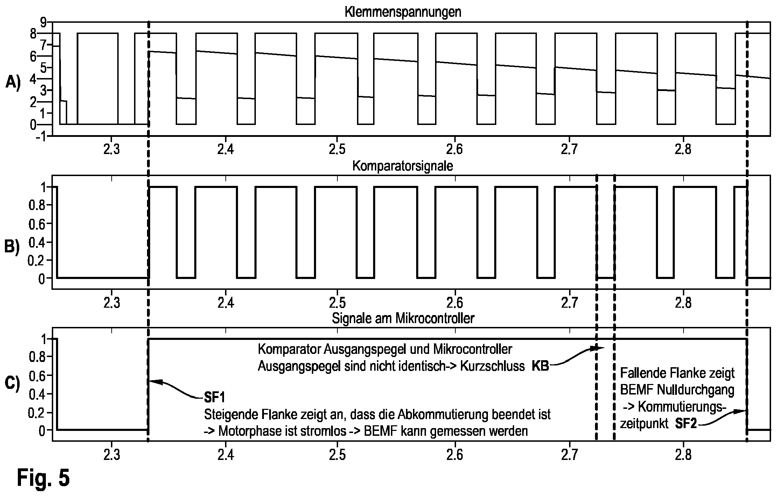

Fig. 5C) zeigt schließlich den sich aus den bisher beschriebenen Zusammenhängen ergebenden Signalverlauf im Signalpfad (vgl. Fig. 1 Signalpfad GPIOB) des Mikrocontrollers bzw. direkt am Mikrocontrollerpin. Durch die Signalkonditionierung werden lediglich zwei Signalflanken pro Kommutierungsabschnitt erzeugt. Eine erste Signalflanke SF1 zeigt an, dass die nicht angesteuerte Motorphase tatsächlich stromlos ist und eine zweite Signalflanke SF2 zeigt den BEMF Nulldurchgang an, welche dem Kommutierungszeitpunkt entspricht.

Wie der Fig. 5C entnommen werden kann, entspricht in den ungültigen PWM Zeitabschnitten (Kurzschlussbereich), der Mikrocontrollerausgangspegel (Signalpfad des Mikrocontrollers ist im Ausgangsmodus) nicht dem Pegel des Komparatorsignals. Dies würde einen Kurzschluss des Mikrocontrollerpins mit dem Komparatorausgang bedeuten. Um dies zu verhindern, dies ist aus Fig. 1 ersichtlich, wird jeweils zwischen einem Komparatorsignal ausgebenden Komparatorausgang des Komparators und einem mit dem Signalpfad, verbundenen Pin des Mikrocontrollers ein ohmscher Widerstand vorgesehen. Dadurch wird im Falle eines ungleichen Ausgangspegels des Mikrocontrollers und des Komparators der fließende Strom limitiert.

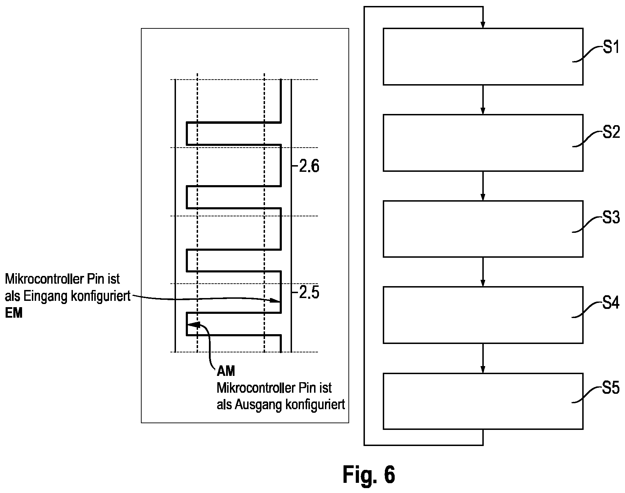

Mit Bezug auf Fig. 6 wird nun ein bevorzugtes Verfahren zur sensorlosen Kommutierung eines bürstenlosen Gleichstrommotors unter Einschluss des zeitlichen Ablaufs einer interruptbasierten Kommutierungssequenz beschrieben.

In einem ersten Schritt S1 wird, der flankenbezogene Interrupt-Trigger des Mikrocontrollers und/oder der zum Signalpfad des Mikrocontrollers der aktuell nicht bestromten Motorklemme gehörige externe Interrupt deaktiviert.

In einem sich anschließenden zweiten Schritt S2 wird eine neue Leistungsschalterkombination gesetzt, um die passende Bestromung für den aktuellen Rotorpositionssektor des BLDC Motors herstellen zu können.

In einem sich anschließenden dritten Schritt S3 wird der aktive Komparator dem neuen Rotorpositionssektor und somit der aktuell nicht bestromten Motorklemme entsprechend angepasst. Es ergibt sich somit ebenfalls ein anderer Mikrocontroller Signalpfad. Danach wird die bereits beschriebene Signalkonditionierung für den aktuellen Mikrocontroller Signalpfad ausgeführt und ausgewählt, ob ein Interrupt des Mikrocontrollers, welcher das Ende der Abkommutierung erkennt, bei steigender oder fallender Signalflanke ausgelöst werden soll. Schlussendlich wird der zugehörige Interrupt aktiviert.

In einem sich anschließenden vierten Schritt S4 wird, sobald erkannt wird, dass die nicht aktive Motorphase stromlos ist (dies wird durch den Interrupt angezeigt), dieser Interrupt wieder deaktiviert, um ein zweites Aufrufen der Interrupt Sequenz zu verhindern.

In einem sich anschließenden fünften Schritt S5 wird die Signalflankenerkennung bzw. der Interrupt Flankentrigger des Mikrocontrollerpins auf Basis des aktuellen Rotorpositionssektors so umkonfiguriert (steigende oder fallende Flanke), dass der BEMF Nulldurchgang detektiert werden kann. Anschließend wird der interrupt wieder aktiviert.

Wird durch den Interrupt ein BEMF Nulldurchgang erkannt, wird wieder der erste Schritt S1 ausgeführt. Die Sequenz der Schritte S1 bis S5 wird vorzugsweise so lange wiederholt, wie der BLDC Motor im BEMF Nulldurchgangsbetrieb läuft.

Vorzugsweise wird, solange die Sequenz der Schritte S1 bis S5 abläuft, der mit dem aktiven Komparator (der nicht bestromten Motorphase zugehörig) verbundene Signalpfad des Mikrocontrollers periodisch zwischen dem Eingangsmodus und dem Ausgangsmodus umgeschaltet (vgl. Fig. 3C). Es hat sich als vorteilhaft herausgestellt, wenn dieses Umschalten synchron zum PWM Trägersignal der Motorregelung und in Abhängigkeit des Tastverhältnisses der Motorregelung erfolgt.

### Bezuaszeichenliste

- 10, 20, 30: Komparator
- 80: Mikrocontroller
- 100: Schaltungsanordnung
- R1... R9: Ohmsche Widerstände

- GPIOA, GPIOB, GPIOC: Signalpfade des Mikrocontrollers
- VADIV, VBDIV, VCDIV: Klemmenspannungen des BLDC Motors
- VK1, VK2, VK3: Komparatorsignal am Ausgang des Komparators
- VSTAR: Sternpunktspannung des BLDC Motors

- S1...S5: Verfahrensschritte
- AM: Ausgangsmodus
- EM: Eingangsmodus
- KB: Kurzschlussbereich
- SF1: Erste Signalflanke
- SF2: Zweite Signalflanke

## Patentansprüche

1. Verfahren zum Betreiben einer Schaltungsanordnung (100) im Rahmen einer BEMF Nulldurchgangserkennung, die als Grundlage für eine sensorlose Kommutierung eines bürstenlosen Gleichstrommotors dient, wobei die Schaltungsanordnung (100) wenigstens einen Komparator (10, 20, 30) und einen Mikrocontroller (80) aufweist, wobei der Komparator (10, 20, 30) dazu eingerichtet ist, eine Phasenspannung oder Klemmenspannung (VADIV, VBDIV, VCDIV) des bürstenlosen Gleichstrommotors mit einer Sternpunktspannung (VSTAR) des bürstenlosen Gleichstrommotors zu vergleichen und ein entsprechendes Komparatorsignal an einen mit dem Komparator (10, 20, 30) verbundenen Signalpfad des Mikrocontrollers (80) und/oder Mikrocontrollerpin auszugeben,
**dadurch gekennzeichnet, dass** der mit dem Komparator (10, 20, 30) verbundene Signalpfad des Mikrocontrollers (80) und damit der Mikrocontrollerpin periodisch zwischen einem Eingangsmodus (EM) und einem Ausgangsmodus (AM) umgeschaltet wird.

2. Verfahren nach Anspruch 1,
**dadurch gekennzeichnet, dass** ein mit dem Signalpfad des Mikrocontrollers (80) verbundener Pin des Mikrocontrollers (80) im Eingangsmodus (EM) als Eingang konfiguriert ist, um das Komparatorsignal des Komparators (10, 20, 30) für die BEMF Nulldurchgangserkennung auszuwerten.

3. Verfahren nach Anspruch 2,
**dadurch gekennzeichnet, dass** der mit dem Signalpfad des Mikrocontrollers (80) verbundene Pin des Mikrocontrollers (80) im Ausgangsmodus (AAM) als Ausgang konfiguriert ist, und so mit dem von ihm bereitgestellten Signalpegel den anliegenden Pegel am Flankendetektor des Mikrocontrollerpins konditioniert.

4. Verfahren nach Anspruch 3,
**dadurch gekennzeichnet, dass** während sich der Pin des Mikrocontrollers (80) im Ausgangsmodus (AM) befindet, der Signalpfad des Mikrocontrollers (80) und das Komparatorausgangssignal den gleichen oder einen unterschiedlichen Signalpegel aufweisen können.

5. Verfahren nach wenigstens einem der vorangehenden Ansprüche,
**dadurch gekennzeichnet, dass** der Komparator (10, 20, 30) außerhalb des Mikrocontrollers (80) angeordnet ist und zwischen einem das Komparatorsignal ausgebenden Komparatorausgang des Komparators (10, 20, 30) und einem mit dem Signalpfad verbundenen Pin des Mikrocontrollers (80) ein ohmscher Widerstand (R1 ... R9) vorgesehen ist.

6. Verfahren nach wenigstens einem der vorangehenden Ansprüche,
**dadurch gekennzeichnet, dass** das Umschalten zwischen Eingangs- und Ausgangsmodus (EM, AM) synchron zu einem PWM Trägersignal der Motorregelung des bürstenlosen Gleichstrommotors und/oder in Abhängigkeit eines Tastverhältnisses der Motorregelung des bürstenlosen Gleichstrommotors erfolgt.

7. Verfahren nach einem der vorangehenden Ansprüche,
**dadurch gekennzeichnet, dass** das Verfahren im Rahmen der sensorlosen Kommutierung des bürstenlosen Gleichstrommotors die folgenden Schritte aufweist:
(S1) Deaktivieren des flankenbezogenen Interrupt-Triggers des Mikrocontrollers (80) und/oder Deaktivieren eines externen Interrupts des zum Signalpfad des Mikrocontrollers (80) zugehörigen Mikrocontrollerpins der aktuell nicht bestromten Motorklemme, wenn eine durchzuführende Kommutierung erkannt wird;
(S2) Setzen einer neuer Leistungsschalterkombination für den bürstenlosen Gleichstrommotor, um eine passende Bestromung für den aktuellen Rotorpositionssektor des bürstenlosen Gleichstrommotors herstellen zu können;
(S3) Deaktivieren des im dritten Schritt (S3) aktivierten Interrupts, sobald erkannt wird, dass die nicht aktive Motorphase stromlos ist; und
(S4) Umkonfigurieren des Interrupt Triggers auf eine entweder steigende oder fallende Flanke abhängig vom aktuellen Rotorpositionssektor zur Detektion des BEMF Nulldurchgangs. Anschließend wird der umkonfigurierte Interrupt aktiviert.

8. Verfahren nach Anspruch 7,
**dadurch gekennzeichnet, dass** nach erfolgreicher Detektion eines BEMF Nulldurchgangs die Verfahrensschritte (S1...S5) beginnend mit dem ersten Verfahrensschritt (S1) wiederholt werden, insbesondere so lange, wie der bürstenlose Gleichstrommotor in einem BEMF Nulldurchgangsbetrieb betrieben werden soll.

9. Schaltungsanordnung (100) zur BEMF Nulldurchgangserkennung bei einem bürstenlosen Gleichstrommotor, wobei die Schaltungsanordnung (100) wenigstens einen Komparator (10, 20, 30) und einen Mikrocontroller (80) aufweist, wobei der Komparator (10, 20, 30) dazu eingerichtet ist, eine Phasenspannung und/oder Klemmenspannung (VADIV, VBDIV, VCDIV) des bürstenlosen Gleichstrommotors mit einer Sternpunktspannung (VSTAR) des bürstenlosen Gleichstrommotors zu vergleichen und ein entsprechendes Komparatorsignal (VK1, VK2, VK3) an einen Signalpfad (GPIOA, GPIOB, GPIOC) des Mikrocontrollers (80) und den damit verbundenen Pins des Mikrocontrollers (80) auszugeben,
**dadurch gekennzeichnet, dass** der Mikrocontroller (80) eingerichtet ist, den zum Signalpfad (GPIOA, GPIOB, GPIOC) zugehörigen Mikrocontrollerpin periodisch zwischen einem Eingangsmodus (EM) und einem Ausgangsmodus (AM) umzuschalten.

10. Schaltungsanordnung (100) nach Anspruch 9,
**dadurch gekennzeichnet, dass** der Komparator (10, 20, 30) außerhalb des Mikrocontrollers (80) angeordnet ist und zwischen einem das Komparatorsignal ausgebenden (VK1, VK2, VK3) Komparatorausgang des Komparators (10, 20, 30) und einem mit dem Signalpfad (GPIOA, GPIOB, GPIOC) verbundenen Pin des Mikrocontrollers (80) ein ohmscher Widerstand (R7, R8, R9) vorgesehen ist.

11. Schaltungsanordnung (100) nach Anspruch 9,
**dadurch gekennzeichnet, dass** der Komparator (10, 20, 30) innerhalb des Mikrocontrollers (80) angeordnet ist und einem Komparatoreingang des Komparators (10, 20, 30) ein ohmscher Widerstand (R1 ... R9) vorgeschaltet ist.

12. Elektrische Handwerkzeugmaschine mit einem bürstenlosen Gleichstrommotor, der vorzugsweise dreiphasig ausgebildet ist, und mit einer Leistungsschalterkombination zum sensorlosen Kommutieren des bürstenlosen Gleichstrommotors, wobei die Handwerkzeugmaschine wenigstens eine Schaltungsanordnung (100) nach wenigstens einem der Ansprüche 9 bis 11 aufweist, und wobei die Schaltungsanordnung (100) wenigstens zeitweise ein Verfahren nach wenigstens einem der Ansprüche 1 bis 10 ausführt.
